**Europäisches Patentamt**

**European Patent Office**

**Office européen des brevets**

(19)

(11) Veröffentlichungsnummer : **0 394 281 B1**

(12)

# EUROPÄISCHE PATENTSCHRIFT

(45) Veröffentlichungstag der Patentschrift :
**04.03.92 Patentblatt 92/10**

(51) Int. Cl.⁵ : **F23C 11/02, F02C 3/20**

(21) Anmeldenummer : **88907659.2**

(22) Anmeldetag : **06.09.88**

(86) Internationale Anmeldenummer :
**PCT/EP88/00806**

(87) Internationale Veröffentlichungsnummer :
**WO 89/02564 23.03.89 Gazette 89/07**

(54) **DRUCKAUFGELADEN BETREIBBARE WIRBELSCHICHTFEUERUNG.**

(30) Priorität : **07.09.87 DE 3729910**

(43) Veröffentlichungstag der Anmeldung :
**31.10.90 Patentblatt 90/44**

(45) Bekanntmachung des Hinweises auf die
Patenterteilung :
**04.03.92 Patentblatt 92/10**

(84) Benannte Vertragsstaaten :
**AT BE DE FR GB IT LU NL SE**

(56) Entgegenhaltungen :
**EP-A- 0 167 992**
**EP-A- 0 201 066**
**US-A- 4 306 411**
**US-A- 4 355 601**
**US-A- 4 498 286**
**US-A- 4 505 230**
**US-A- 4 656 972**

(73) Patentinhaber : **L. & C. Steinmüller GmbH**
**Postfach 10 08 55**
**W-5270 Gummersbach 1 (DE)**

(72) Erfinder : **CROONENBROCK, Raimund**
**Hermann-Loens-Weg 16**
**W-5250 Engelskirchen (DE)**
Erfinder : **MÜLLER, Horst**
**Danziger Strasse 20**
**W-5275 Bergneustadt (DE)**
Erfinder : **STEVEN, Hubert**
**Beethovenstrasse 15**
**W-5270 Gummersbach (DE)**
Erfinder : **SUDAU, Bernd**
**Wasserfuhrstrasse 21**
**W-5270 Gummersbach (DE)**

(74) Vertreter : **Carstens, Wilhelm, Dipl.-Phys.**
**Postfach 10 08 55/10 08 65 Fabrikstrasse 1**
**W-5270 Gummersbach 1 (DE)**

EP 0 394 281 B1

EP 0 394 281 B1

## Beschreibung

Die Erfindung betrifft eine druckaufgeladen betreibbare Wirbelschichtfeuerung der im Oberbegriff des Anspruches 1 genannten Art.

Aus der EP-A-0 201 066 ist eine derartige Wirbelschichtfeuerung bekannt, bei der das zurückgeführte Rauchgas als inertes Transportgas für den in der Wirbelschichtfeuerung zu verbrennenden Brennstoff verwendet wird. In dem Feuerraum ist eine Heizflächenbaugruppe angeordnet, um aus dem Feuerraum Wärme abzuführen. Das nicht für den Transport von Brennstoff verwendete Rauchgas wird in einer einen Luftverdichter antreibenden Expansionsturbine entspannt.

Aus der DE-OS 35 36 451 ist eine Wirbelschichtfeuerung bekannt, bei der im Betrieb Rauchgas mit hoher Temperatur, vorzugsweise Feuerraumtemperatur, über eine Expansionsturbine geführt wird, die auf gleicher Welle über mindestens eine Kupplung mit einem in einer Luftleitung angeordneten Luftverdichter und mit einer elektrischen Maschine verbunden ist. Die elektrische Maschine kann dabei als Antriebsmotor für den Luftverdichter oder als Generator geschaltet werden. Diese Art der Feuerung wird stets in einem kombinierten Gas- und Dampfturbinenprozeß betrieben, da die im Feuerraum freigesetzte Wärme anteilig in einer Einrichtung bestehend aus mehreren Heizflächen zur Dampferzeugung und zur Erwärmung der abgeführten Rauchgase genutzt wird.

Zur Einstellung der in der Wirbelschicht meist vorherrschenden Reaktionstemperturen von etwa 850° C auch im Hinblick auf die Bildung von umweltbelastenden Schadstoffen im Rauchgas, beispielsweise $NO_X$, ist der Feuerraum der Wirbelschichtfeuerung in den Wasser-Dampf-Kreislauf der Dampferzeugung eingebunden. Die dafür notwendigen Wärmetauscher und Heizflächen sind aufgrund eines relativ hohen Flugstaubanteils im Rauchgas in Verbindung mit einer hohen Reaktionstemperatur im Feuerraum der Wirbelschichtfeuerung stark erosions- bzw. abrasionsgefährdet.

Der Erfindung liegt die Aufgabe zugrunde, eine druckaufgeladen betreibbare Wirbelschichtfeuerung anlagenmäßig derart zu gestalten, daß keine Wärmetauscher und heizflächen im Feuerraum der Wirbelschichtfeuerung angeordnet sind und dennoch die für eine minimale Schadstoffeinbindung maßgebenden Reaktionsbedingungen eingehalten werden.

Die Aufgabe wird erfindungsgemäß durch die Merkmale im kennzeichen des Anspruchs 1 gelöst.

Mit der Rückführung einer Teilmenge von Rauchgas in die Wirbelschicht über die Verbrennungsluftzufuhr kann in Abhangigkeit von der an der Leitungsabzweigung in der Rauchgasleitung herrschenden Rauchgastemperatur durch eine in der Leitung vorgesehene Steuerung der Rauchgasmenge gezielt die für eine minimale Schadstoffeinbindung maßgebende Reaktionstemperatur in der Wirbelschicht eingestellt werden. Auf diese Weise kann eine Kühlung des Feuerraums durch vom Wasser-Dampf-Kreislauf durchströmter Heizflächen bzw. Wärmetauscher in der Wirbelschicht und an deren Feuerraumwänden entfallen, wobei die gesamte in der Wirbelschichtfeuerung freigesetzte Wärme mit dem aus dem Feuerraum strömenden Rauchgas ausgetragen wird. Die zur Rauchgasrückführung vorgesehene Leitung kann nach einem Staubabscheider erschieden angeordnet sein.

So kann es zweckmäßig sein, wenn die Rauchgasrückführleitung die Rauchgasleitung nach der Expansionsturbine und die Verbrennnungsluftleitung vor dem Luftverdichter verbindert.

Demgegenüber kann es auch zweckmäßig sein, wenn die Rauchgasrückführleitung die Rauchgasleitung vor der Expansionsturbine und die Verbrennungsluftleitung nach dem Luftverdichter verbindet und einen Wärmetauscher sowie ein Druckerhöhungsgebläse aufweist.

Bezüglich der zuletzt gennanten Möglichkeit für eine Anordnung der Rauchgasrückführleitung kann es ferner zweckmäßig sein, wenn eine weitere steuerbare Rauchgasrückführleitung die Rauchgasleitung nach der Expansionsturbine und die Verbrennungsluftleitung vor dem Luftverdichter verbindert.

Alle diese gennanten Anordnungsmöglichkeiten sind gleichermaßen geeignet, ausschließlich elektrische Energie über die als Generator geschaltete elektrische Maschine zu gewinnen. Der Einsatz einer bestimmten Anordnung einer Rauchgasrückführleitung ist jedoch dann in Betracht zu ziehen, wenn es gilt, die rückgeführte Rauchgasmenge möglichst klein zu halten und zugleich eine bestimmte Wärmemenge von einem bestimmten Temperaturniveau für einen vorgegebenen Zweck, beispielsweise zur Dampfterzeugung, Fernwärme oder Prozeßwärme bereitzustellen.

In dem Falle, bei dem die Rauchgasrückführteitung nach der Expansionsturbine abzweigt, ist es zweckmäßig, wenn ein Wärmetauscher in der Rauchgasleitung nach der Expansionsturbine und vor der Abzweigung der Rauchgasrückführteitung angeordnet ist. Über diesen Wärmetauscher läßt sich eine retativ große Wärmemenge von niederem Temperaturniveau insbesondere zur Fernwärmebereitstellung auskoppeln.

Für den Fall, daß die Rauchgasrückführleitung vor der Expansionsturbine abzweigt, ist es zweckmäßig, wenn Wärmetauscher in der Rauchgasleitung zwischen dem Staubabscheider der Wirbelschichtfeuerung und dem Expansionsturbineneintritt, vorzugsweise zwischen der Abzweigung der Rauchgasrückführleitung und

2

dem Expansionsturbineneintritt, und/oder in der vor der Expansionsturbine abzweigenden Rauchgasrückführleitung angeordnet sind. Eine derartige Wärmetauscheranordnung ermöglicht es auch, eine große und/oder kleine Wärmemenge von jeweils hohem Temperaturniveau für eine Dampferzeugung oder als Prozeßwärme allein oder in Kombination mit einer nach einer Expansionsturbine vorgenommenen Wärmeauskopplung bereitzustellen.

Der Einsatz von Wärmetauschern, die einer Expansionsturbine vor und/oder nachgeschaltet sind, ermöglichen es, gezielt Wärme als Ersatz für die direkte Wärmenutzung im Feuerraum der Wirbelschichtfeuerung auszukoppeln. Eine Erosions- bzw. Abrasionsgefährdung von Wärmetauschern ist gegenüber jenen, die unmittelbar im Feuerraum einer Wirbelschichtfeuerung angeordnet sind, durch eine vorherige Staubabscheidung hiermit vermieden.

Die Erfindung wird nachfolgend anhand mehrerer Ausführungsbeispiele in Verbindung mit den zugehörigen Schemazeichnungen näher erläutert. Es zeigen

FIG. 1 ein Anlagenschema einer druckaufgeladen betreibbaren Wirbelschichtfeuerung, bei der die Rauchgasrückführleitung nach einer Expansionsturbine von der Rauchgasleitung abzweigt.

FIG. 2 ein der FIG. 1 ähnliches Anlagenschema, wobei jeweils ein Wärmetauscher vor und/oder nach einer Expansionsturbine in der Rauchgasleitung angeordnet ist.

FIG. 3 ein Anlagenschema einer anderen druckaufgeladen betreibbaren Wirbelschichtfeuerung, bei der eine Rauchgasrückführleitung von der Rauchgasleitung vor einer Expansionsturbine abzweigt und wobei jeweils ein Wärmetauscher in der Rauchgasrückführleitung und in der Rauchgasleitung nach der Expansionsturbine angeordnet ist.

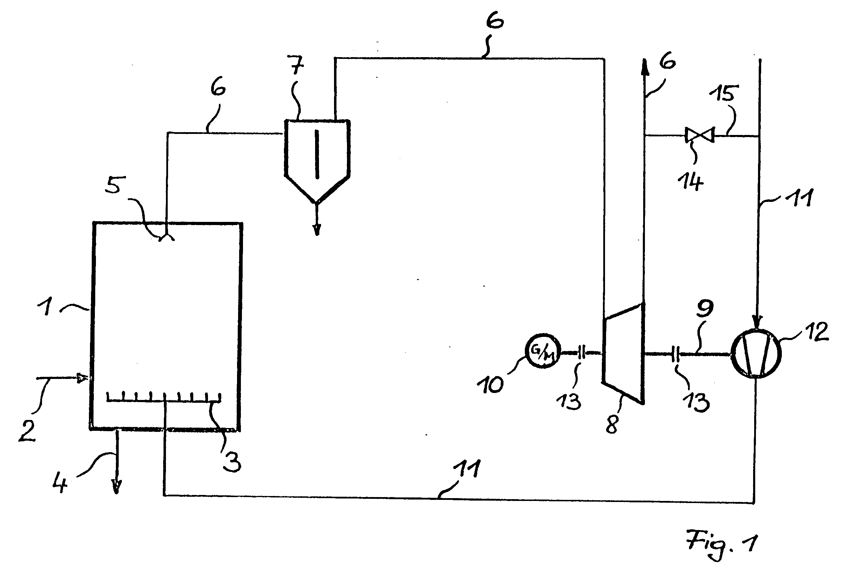

Gemäß FIG. 1 ist einer durckaufgeladen betreibbaren Wirbelschichtfeuerung mit einem wärmetauscher- und heizflächenfreien Feuerraum (1) mit Einrichtungen für eine Brennstoff- (2) und Verbrennungsluftzufuhr (3) sowie einem Asche- (4) und Rauchgasabzug (5) in einer Rauchgasleitung (6) ein Staubabscheider (7) und eine Expansionsturbine (8) nachgeschaltet. Die Expansionsturbine (8) ist auf gleicher Welle (9) mit einer elektrischen Maschine (10) und mit einem in einer Verbrennungsluftleitung (11) angeordneten Luftverdichter (12) über zwei Kupplungen (13) verbunden, wobei die Verbrennungsluftleitung (11) in die Einrichtung für die Verbrennungsluftzufuhr (3) mündet. Die elektrische Maschine (10) ist in Abhängigkeit vom Betriebszustand als Motor oder als Generator geschaltet, wobei die Schaltung als Motor in erster Linie während des Anfahrens erforderlich ist. Von der der Expansionsturbine (8) abgehenden Rauchgasleitung (6) zweigt eine durch ein Ventil (14) steuerbare Rauchgasrückführleitung (15) ab, die in die vor dem Luftverdichter (12) befindliche Verbrennungstuftleitung (11) mündet.

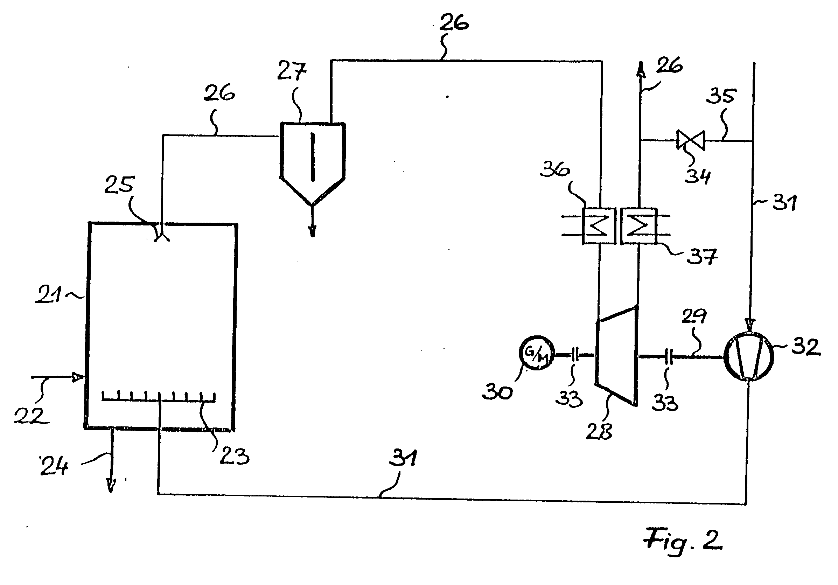

Verbrennungsluft wird über die Verbrennungsluftleitung (11) von dem Luftverdichter (12) aus der Umgebung angesaugt, auf einen erforderlichen Druck verdichtet und dem Wirbelschichtfeuerraum (1) über die Einrichtung der Verbrennungsluftzufuhr (3) zugeführt, wobei eine Teilmenge des aus der Expansionsturbine (8) austretenden, expandierten Rauchgases vor dem Luftverdichter (12) der angesaugten Verbrennungsluft zugemischt wird. Die Teilmenge des rückgeführten Rauchgases, mit der die Reaktionstemperaturen im Feuerraum (1) der Wirbelschichtfeuerung in Hinblick auf eine Bildung von umweltbelastendem Schadstoff beeinflußt werden sollen, bestimmt sich aus der dem Wirbelschichtfeuerraum (1) abzuführenden Wärme und der spezifischen Energie des aus der Expansionsturbine (8) austretenden, expandierten Rauchgases. Ein Einsatz einer Wirbelschichtfeuerung gemäß FIG. 1 bietet sich stets dann an, wenn ausschließlich elektrische Energie über die als Generator geschaltete elektrische Maschine (10) gewonnen werden soll. Um die rückgeführte Rauchgasmenge möglichst klein zu halten und um die im Rauchgas abgeführte Wärme für die verschiedensten Zwecke zu nutzen, kann im Prozeßablauf eine Wärmeauskopplung vorgesehen sein. Gemäß FIG. 2, die ein zu FIG. 1 vergleichbares Anlagenschema wiedergibt, ist in einer Rauchgasleitung (26) jeweils ein Wärmeaustauscher (36, 37) vor und/oder nach einer Expansionsturbine (28) angeordnet, mit dem eine kleine Wärmemenge (36) von hohem Temperaturniveau zur Dampferzeugung oder zur Prozeßwärmebereitstellung und/oder eine große Wärmemenge (37) von niederem Temperaturniveau zur Fernwärmebereitstellung ausgekoppelt wird.

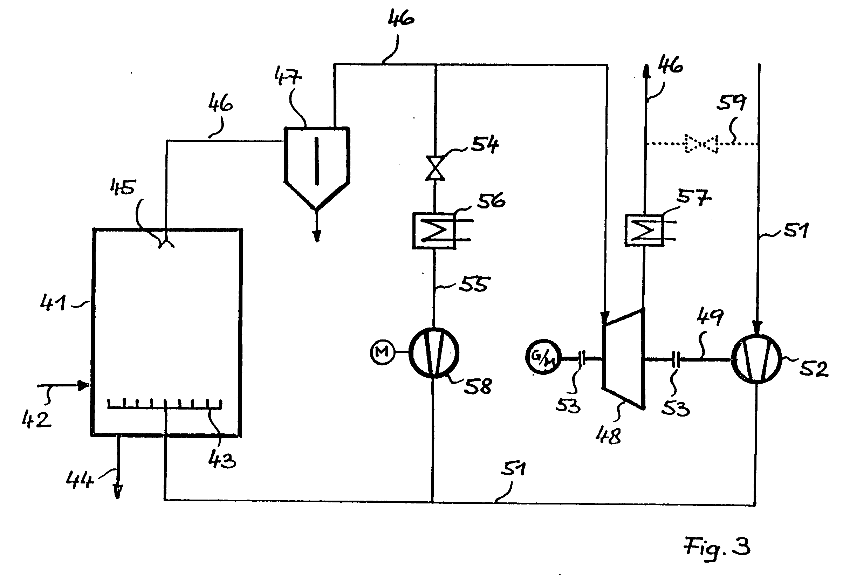

Alternativ zu der Ausführung gemäß FIG. 1und FIG. 2 kann entsprechend FIG. 3 eine Rauchgasrückführleitung (55) von einer Rauchgasleitung (46) zwischen einem Staubabscheider (47) und einer Expansionsturbine (48) abzweigen. Diese durch ein Ventil (54) steuerbare Rauchgasrückführleitung (55) mündet in eine zwischen einem Luftverdichter (52) und einer Einrichtung zur Verbrennungsluftzufuhr (43) im Feuerraum (41) einer druckaufgeladen betreibbaren Wirbelschichtfeuerung befindlchen Verbrennungsluftleitung(51), in der ein Wärmetauscher (56) und ein Druckerhöhungsgebläse (58) angeordnet sind. Ein weiterer zur Wärmeauskopplung vorgesehener Wärmetauscher (57) ist in der Rauchgasleitung (46) nach der Expansionsturbine (48) vorgesehen. Entsprechend diesem Anlagenschema wird eine in den Wirbelschichtfeuerraum (41) rückzuführende Rauchgasteilmenge der Rauchgasleitung (46) vor der Expansionsturbine (48) entnommen, im Wärmetauscher (56) gekühlt und nach erfolgter Erhöhung seines Gasdruckes im Druckerhöhungsgebläse (58) der in der Verbrennungsluftleitung (51) geführten und in dem Luftverdichter (52) komprimierten Verbrennungsluft zugemischt. Über den vor der Expansionsturbine (48) angeordneten Wärmetauscher (56) läßt sich eine große Wärmemenge von hohem Temperaturniveau, über den nach der Expansionsturbine (48) angeordneten Wärmetauscher (57) eine retativ große Wärmemenge aber von niederem Temperaturniveau bereitstellen.

Bei dem in der FIG. 3 beschriebenen Ausführungsbeispiel besteht auch die Möglichkeit, ggf. eine weitere, durch ein Ventil steuerbare Rauchgasrückführleitung (59) - die Leitung ist als punktierte Linie dargestellt - so anzuordnen, daß sie die Rauchgasleitung (46) nach der Expansionsturbine (48) und die Verbrennungsluftleitung (51) vor dem Luftverdichter (52) verbindet. Bezüglich der Anordnung zur Wärmeauskopplung vorgesehenen Wärmetauscher bestehen bei den beschriebenen Anlagenschemen je nach den Erfodernissen, z. B. für die Dampferzeugung, für die Fernwärme- oder Prozeßwärmebereitstellung, auch andere Möglichkeiten, diese außerhalb des Feuerraums einer druckaufgeladen betreibbaren Wirbelschichtfeuerung, d. h. nach einem Staubabscheider, einzeln oder in Kombination in der Rauchgasleitung vor und/oder nach einer Expansionsturbine und/oder in einer Rauchgasrückführleitung anzuordnen.

## Patentansprüche

1. Druckaufgeladen betreibbare Wirbelschichtfeuerung mit einem Feuerraum, mit einem diesem nachgeschalteten, in eine Rauchgasleitung angeordneten Staubabscheider und mit einem in einer Verbrennungsluftleitung befindlichen Luftverdichter, der auf gleicher Welle mit einer in der Rauchgasleitung angeordneten Expansionsturbine verbunden ist, wobei nach dem Staubabscheider von der Rauchgasleitung mindestens eine steuerbare Leitung für eine Rückführung einer gekühlten Teilmenge von Rauchgas in den Feuerraum abzweigt, **dadurch gekennzeichnet** , daß der Feuerraum (1, 21, 41) ein wärmetauscher- und heizflächenfreier Feuerraum ist, und daß die abzweigende Leitung (15; 35; 55) in Abhängigkeit von der an der Leitungsabzweigung herrschenden Rauchgastemperatur steuerbar ist und eine Teilmenge von durch Expansion in der auf gleicher Welle mit einer elektrischen Maschine (10; 30) verbundenen Expansionsturbine (8; 28; 48) und/oder Wärmetausch abgekühltem Rauchgas über die Verbrennungsluftzufuhr (3; 23; 43) zurückführt.

2. Wirbelschichtfeuerung nach Anspruch 1, **dadurch gekennzeichnet** , daß die Rauchgasrückführleitung (15; 35) die Rauchgasleitung (6; 26) nach der Expansionsturbine (8; 28) und die Verbrennungsluftleitung (11; 31) vor dem Luftverdichter (12; 32) verbindet.

3. Wirbelschichtfeuerung nach Anspruch 1, **dadurch gekennzeichnet** , daß die Rauchgasrückführleitung (55) die Rauchgasleitung (46) vor der Expansionsturbine (48) und die Verbrennungsluftleitung (51) nach dem Luftverdichter (52) verbindet und einen Wärmetauscher (56) sowie ein Druckerhöhungsgebläse (58) aufweist.

4. Wirbelschichtfeuerung nach Anspruch 3, **dadurch gekennzeichnet** , daß eine weitere steuerbare Rauchgasrückführleitung (59) die Rauchgasleitung (46) nach der Expansionsturbine (48) und die Verbrennungsluftleitung (51) vor dem Luftverdichter (52) verbindet.

5. Wirbelschichtfeuerung nach einem der Ansprüche 1, 2 und 4, **dadurch gekennzeichnet** , daß ein Wärmetauscher (37; 57) in der Rauchgasleitung (26; 46) nach der Expansionsturbine (28; 48) und vor der Abzweigung der Rauchgasrückführleitung (35; 59) angeordnet ist.

6. Wirbelschichtfeuerung nach einem der Ansprüche 1, 3 und 5, **dadurch gekennzeichnet** , daß Wärmetauscher (36; 56) in der Rauchgasleitung (26) zwischen dem Staubabscheider (27), der Wirbelschichtfeuerung und dem Expansionsturbineneintritt (28), vorzugsweise zwischen der Abzweigung der Rauchgasrückführleitung und dem Expansionsturbineneintritt, und/oder in der vor der Expansionsturbine (48) abzweigenden Rauchgasrückführleitung (55) angeordnet sind.

## Revendications

1. Installation de combustion à lit fluidifié conçu pour pouvoir fonctionner sous pression et comprenant une chambre de combustion, un séparateur de poussières monté en aval de celle-ci sur une canalisation de gaz brûlés et un compresseur placé sur une canalisation d'air de combustion et monté sur le même axe qu'une turbine de détente située sur la canalisation de gaz brûlés, au moins une canalisation réglable étant dérivée de la canalisation de gaz brûlés, en aval du séparateur de poussière, pour recycler une partie refroidie des gaz brûlés vers la chambre de combustion, caractérisée en ce que la chambre de combustion (1 ; 21 ; 41) est une chambre de combustion sans échangeur de chaleur ni surface de chauffe et en ce que la canalisation dérivée (15 ; 35 ; 55) est réglable en fonction de la température des gaz brûlés à l'embranchement de ladite canalisation dérivée et, par l'amenée (3 ; 23 ; 43) d'air de combustion, recycle une partie des gaz brûlés qui se sont refroidis lors de leur détente dans la turbine de détente (8 ; 28, 48), qui est montée sur le même axe qu'une machine électrique (10 ; 30), et/ou dans un échangeur de chaleur.

2. Installation de combustion à lit fluidifié selon la revendication 1, caractérisée en ce que la canalisation de recyclage (15 ; 35) des gaz brûlés relie la canalisation (6 ; 26) de gaz brûlés, en aval de la turbine de détente (8 ; 18), à la canalisation (11 ; 31) d'air de combustion, en amont du compresseur (12 ; 32).

3. Installation de combustion à lit fluidifié selon la revendication 1, caractérisée en ce que la canalisation de recyclage (55) des gaz brûlés relie la canalisation (46) de gaz brûlés, en amont de la turbine de détente (48), à la canalisation (51) d'air de combustion, en aval du compresseur (52), et comporte un échangeur de chaleur (56) ainsi qu'une soufflante (58) destinée à augmenter la pression.

4. Installation de combustion à lit fluidifié selon la revendication 3, caractérisée en ce qu'une autre canalisation réglable de recyclage (59) des gaz brûlés, relie la canalisation (46) de gaz brûlés, en aval de la turbine de détente (48), à la canalisation (51) d'air de combustion, en amont du compresseur (52).

5. Installation de combustion à lit fluidifié selon l'une des revendications 1, 2 et 4, caractérisée en ce qu'un échangeur de chaleur (37 ; 57) est monté sur la canalisation (26 ; 46) de gaz brûlés, en aval de la turbine de détente (28 ; 48) et en amont de l'embranchement de la canalisation de recyclage (35 ; 59) des gaz brûlés.

6. Installation de combustion à lit fluidifié selon l'une des revendications 1, 3 et 5, caractérisée en ce que des échangeurs de chaleur (36 ; 56) sont montés sur la canalisation (26) de gaz brûlés, entre le séparateur de poussières (27) de l'installation de combustion à lit fludifié et l'entrée de la turbine de détente (28), de préférence entre l'embranchement de la canalisation de recyclage des gaz brûlés et l'entrée de la turbine de détente et/ou sur la canalisation de recyclage (55) des gaz brûlés dérivée en amont de la turbine de détente (48).

## Claims

1. Fluidized bed combustion system that is operable under pressure including a combustion chamber, a dust separator connected to the combustion chamber and being arranged in a flue gas line and an air compressor disposed in a line for combustion air, which air compressor is connected on the same shaft as an expansion turbine that is disposed in the flue gas line, with at least one controllable line for returning a cooled portion of flue gas to said combustion chamber branching off from said flue gas line downstream of the dust separator, characterized in that the combustion chamber (1, 21, 41) is free of heat exchangers and heat-transfer surfaces, and in that the branching-off line (15; 35; 55) is controllable as a function of the flue gas temperature that exists at the line branch-off and returns a part of the flue gas via the feed mechanism (3; 23; 43) for combustion air, with said flue gas being cooled via expansion in the expansion turbine (8; 28; 48), which is connected on the same shaft as an electrical machine (10; 30), and/or via heat exchange.

2. Fluidized bed combustion system according to claim 1, characterized in that the flue gas return line (15; 35) connects the flue gas line (6,; 26) downstream the expansion turbine (8; 28) and the line (11; 31) for combustion air upstream said air compressor (12; 32).

3. Fluidized bed combustion system according to claim 1, characterized in that the flue gas return line (55) connects the flue gas line (46) upstream the expansion turbine (48) and the line (51) for combustion air downstream the air compressor and is provided with a heat exchanger (56) and a pressure boosting fan (58).

4. Fluidized bed combustion system according to claim 3, characterized in that a further controllable flue gas return line (59) connects the flue gas line (46) downstream the expansion turbine (48) and the line (51) for combustion air upstream the air compressor (52).

5. Fluidized bed combustion system according to anyone of the claims 1, 2 and 4, characterized in that a heat exchanger (37; 57) is arranged in the flue gas line (26; 46) downstream said expansion turbine (28; 48) and upstream the branch-off of the flue gas return line (35; 59).

6. Fluidized bed combustion system according to anyone of the claims 1, 3 and 5, characterized in that heat exchangers (36; 56) are arranged in the flue gas line (26) between the dust separator (27), the fluidized bed combustion and the inlet of expansion turbine (28), preferably between the branch-off of the flue gas return line and the expansion turbine inlet, and/or in the flue gas return line (55) branching off upstream the expansion turbine (48).

Fig. 1

Fig. 2

Fig. 3

EP 0 394 281 B1